# EUROPEAN PATENT APPLICATION

(11) **EP 4 517 978 A1**
(43) Date of publication of application: **05.03.2025**
(21) Application number: 23876702.4
(22) Date of filing: 10.10.2023
(51) Int. Cl.: H01M 50/244, H01M 50/593, H01M 50/588, H01M 50/242

(54) **BATTERY HOUSING, BATTERY CELL, BATTERY, AND ELECTRICAL APPARATUS**

(30) Priority: 12.10.2022 CN 202222686468 U
(71) Applicant: Contemporary Amperex Technology Co., Limited, Ningde, Fujian 352100 (CN)
(72) Inventor: SHI, Shengyun, Ningde, Fujian 352100 (CN); GUO, Zhijun, Ningde, Fujian 352100 (CN); WANG, Peng, Ningde, Fujian 352100 (CN)
(74) Representative: Ziebig Hengelhaupt Intellectual Property Attorneys Patentanwaltskanzlei PartGmbB
(86) International application number: PCT/CN2023/123805
(87) International publication number: WO 2024/078500

(57) **Abstract**

A battery shell, a battery cell, a battery and an electrical device are provided. The battery shell has an accommodation cavity (111), the accommodation cavity (111) includes a bearing bottom wall (1111), a plurality of side walls (1112) and inner corner portions, and each inner corner portion is connected between the bearing bottom wall and the corresponding side walls, where the inner corner portions are provided with receding grooves (112) in a concave manner.

## Description

### CROSS-REFERENCE TO RELATED APPLICATIONS

The present application claims priority to Chinese Patent Application No. 202222686468.3, filed on October 12, 2022 and entitled "BATTERY SHELL, BATTERY CELL, BATTERY AND ELECTRICAL DEVICE", which is incorporated herein by reference in its entirety.

### TECHNICAL FIELD

The present application relates to the technical field of batteries, and in particular, to a battery shell, a battery cell, a battery, and an electrical device.

### BACKGROUND

A battery includes a battery shell and an electrode core. When assembling the battery, the electrode core is usually placed in the battery shell, and the electrode core is in contact with the inner wall of the battery shell. However, the traditional battery has great safety hazards.

### SUMMARY

In view of the situation above, it is necessary to provide a battery shell, a battery cell, a battery, and an electrical device to solve the problem of great safety hazards in a traditional battery.

According to a first aspect of the present application, a battery shell is provided. The battery shell has an accommodation cavity, the accommodation cavity includes a bearing bottom wall, a plurality of side walls and inner corner portions, and each inner corner portion is connected between the bearing bottom wall and the corresponding side walls, where the inner corner portions are provided with receding grooves in a concave manner.

In the technical solution of the present application, an electrode core can be placed in the accommodation cavity and placed on the bearing bottom wall, bottom corner portions of the electrode core placed on the bearing bottom wall are located on the upper side of the bearing bottom wall, and the receding grooves are formed in the inner corner portions between the bearing bottom wall and the side walls and disposed in a concave manner. It is understood that the bottom corner portions of the electrode core can be spaced apart from the groove walls of the receding grooves. In this way, the bottom corner portions of the electrode core can be well prevented from being in contact with the inner corner portions between the bearing bottom wall and the side walls, that is, the bottom corner portions can not be in contact with the battery shell, and it is avoided that corresponding extrusion pressure is generated on the electrode core due to the contact between the battery shell and the bottom corner portions, so that the use of the receding grooves can effectively improve the safety of a battery.

In one embodiment, along a direction perpendicular to the bearing bottom wall, a first preset interval D₁ is provided between the very bottom of the groove wall of each receding groove and the bearing bottom wall. This setting not only facilitates the processing of the receding grooves, but also ensures an internal space of the battery shell, and thus ensures the energy density of the battery cell.

In one embodiment, the first preset interval D₁ is greater than or equal to 0.3 millimeter (mm). The first preset interval D₁ is set to be greater than or equal to 0.3 millimeter (mm), which not only facilitates the processing of the receding grooves, but also ensures the energy density of the battery cell.

In one embodiment, the groove wall of each receding groove is in rounded corner connection with the bearing bottom wall and the corresponding side wall respectively. The stress concentration can be avoided at the connection between the receding grooves and the bearing bottom wall, and at the connection between the receding grooves and the corresponding side walls, which is conducive to improving the strength of the battery shell.

In one embodiment, the groove wall of each receding groove includes a first arc-shaped surface tangent to the bearing bottom wall and a second arc-shaped surface tangent to the corresponding side wall. The use of the first arc-shaped surface and the second arc-shaped surface can well avoid the stress concentration at the connection between the receding grooves and the bearing bottom wall, and at the connection between the receding grooves and the corresponding side wall, which is conducive to improving the strength of the battery shell.

In one embodiment, the first arc-shaped surface and the second arc-shaped surface are directly connected. Therefore, this setting facilitates the processing of the receding grooves and is conducive to improving the processing efficiency of the battery shell.

In one embodiment, each receding groove further includes a third arc-shaped surface connected between the first arc-shaped surface and the second arc-shaped surface, and the third arc-shaped surface is disposed tangent to the first arc-shaped surface and the second arc-shaped surface respectively. The stress concentration can be avoided at the connection between the receding grooves and the bearing bottom wall, and at the connection between the receding grooves and the corresponding side walls, the stress concentration can also be avoided at the groove walls of the receding grooves, and the strength of the battery shell can be better improved.

In one embodiment, the groove wall of each receding groove further includes a straight wall surface, and along the direction perpendicular to the bearing bottom wall, the straight wall surface is spaced apart from the bearing bottom wall, and the straight wall surface is tangent to the first arc-shaped surface and the second arc-shaped surface respectively. By this setting, the bottom corner portions of the electrode core placed on the bearing bottom wall can be well spaced apart from the groove walls of the receding grooves, so that it is avoided that corresponding extrusion pressure is generated on the electrode core due to the contact between the battery shell and the bottom corner portions, and the safety of the battery can be effectively improved.

In one embodiment, the straight wall surface is disposed parallel with the bearing bottom wall. By this setting, the bottom corner portions of the electrode core placed on the bearing bottom wall can be well spaced apart from the groove walls of the receding grooves, and the safety of the battery can be effectively improved

In one embodiment, along a direction perpendicular to each side wall, a second preset interval D₂ is provided between the farthest point on an edge of the first arc-shaped surface tangent to the bearing bottom wall and the side wall. It can not only ensure the energy density of the battery cell, but also ensure that there is a certain interval between the peripheral wall of the electrode core and the side walls, and avoid excessive bearing pressure.

In one embodiment, the second preset interval D₂ is greater than or equal to 0.5 millimeter (mm).

According to a second aspect of the present application, a battery cell is provided. The battery cell includes the foregoing battery shell and an electrode core, and the electrode core has bottom corner portions, where the electrode core is accommodated in an accommodation cavity and placed on a bearing bottom wall, and the bottom corner portions are separated from groove walls of receding grooves. By means of the receding grooves, safety of the battery can be effectively improved, and the stress concentration can also be avoided at the connection between the receding grooves and the bearing bottom wall, and at the connection between the receding grooves and the corresponding side walls, which is conducive to improving the strength of the battery shell.

In one embodiment, the electrode core includes an electrode assembly and an electrical isolation part, and the electrode assembly is electrically isolated from the battery shell through the electrical isolation part. The bottom corner portions include first corner portions disposed on the electrode assembly and second corner portions disposed on the electrical isolation part. By means of the electrical isolation part, the electrode assembly can be electrically isolated from the battery shell, which is conducive to improving safety of the battery cell.

In one embodiment, the electrode assembly has a bottom surface and a plurality of side surfaces, where the first corner portions are connected between the bottom surface and the corresponding side surfaces.

According to a third aspect of the present application, a battery is provided, including the foregoing battery cell.

According to a fourth aspect of the present application, an electrical device is provided, including the foregoing battery.

### BRIEF DESCRIPTION OF DRAWINGS

In order to more clearly illustrate the technical solutions of the embodiments of the present application, the following will briefly introduce the drawings that are desired to be used in the embodiments of the present application. Apparently, the drawings described below are merely some embodiments of the present application, from which other drawings may be obtained by a person of ordinary skill in the art without creative work. In the accompanying drawings:
FIG. 1 is a schematic structural diagram of a vehicle according to one or more embodiments.
FIG. 2 is a schematic structural diagram of a battery cell according to one or more embodiments.
FIG. 3 is a schematic exploded diagram of the battery cell according to one or more embodiments.
FIG. 4 is a sectional diagram of the battery cell according to one or more embodiments.
FIG 5 is a close-up view of a part A shown in FIG. 4.

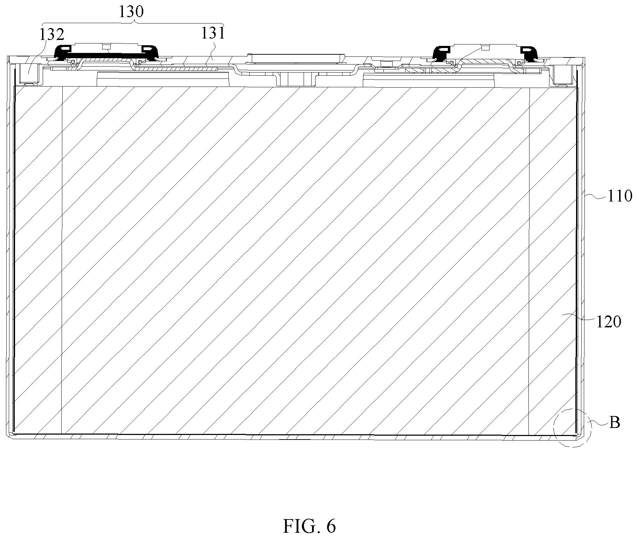

FIG. 6 is a sectional diagram of a battery cell according to another one or more embodiments.
FIG 7 is a close-up view of a part B shown in FIG. 6.

Reference numerals: 1, Vehicle; 10, Battery; 100, Battery cell; 110, Battery shell; 111, Accommodation cavity; 1111, Bearing bottom wall; 1112, Side wall; 1113, First opening; 112, Receding groove; 1121, First arc-shaped surface; 1122, Second arc-shaped surface; 1123, Third arc-shaped surface; 1124, Straight wall surface; 120, Electrode core; 121, Electrode assembly; 122, Electrical isolation part; 1221, Second opening; 1222, Bottom plate portion; 1223, Side wall portion; 1206, Notch; 1201, Bottom corner portion; 1202, First corner portion; 1203, Bottom surface; 1204, Side surface; 1205, Second corner portion; 130, Top cover; 131, Top cover body; 132, Protrusion portion; 20, Motor; and 30, Controller.

### DETAILED DESCRIPTION OF EMBODIMENTS

In order to make the above purposes, characteristics and advantages of the present application more obvious and understandable, the following is a detailed explanation of the specific implementations of the present application with reference to the accompanying drawings. Many specific details are set out in the description below in order to fully understand the present application. However, the present application can be implemented in many other ways different from those described herein, and a person skilled in the art may make similar improvements without contravening the meaning of the present application, and therefore the present application is not limited to the specific embodiments disclosed below.

Understandably, in the description of the present application, a direction or a positional relationship indicated by the terms such as "center", "longitudinal", "transverse", "length", "width", "thickness", "up", "down", "before", "after", "left", "right", "vertical", "horizontal", "top", "bottom", "in", "out", "clockwise", "counterclockwise", "axial", "radial", and "circumferential" is a direction or positional relationship based on the illustration in the drawings, and is merely intended for ease or brevity of description of the present application, but not intended to indicate or imply that the mentioned device or component must be located in the specified direction or constructed or operated in the specified direction. Therefore, such terms are not intended as a limitation on the present application.

In addition, the terms "first" and "second" are used merely for descriptive purposes but are not to be construed as indicating or implying relative importance or implicitly specifying the quantity of technical features indicated. Therefore, a feature defined with "first" or "second" may explicitly or implicitly include at least one of the features. In the description of the present application, unless otherwise expressly and specifically defined, "a plurality of" means at least two, for example, two, three, etc.

In the present application, unless otherwise expressly specified or defined, the terms such as "mount", "concatenate", "connect" and "fix" shall be understood broadly, for example, mean a fixed connection, a detachable connection, or a one-piece configuration; or mean a mechanical connection or an electrical connection; or mean a direct connection or an indirect connection implemented through an intermediary; or mean internal communication between two components or interaction between two components, unless otherwise expressly defined. A person of ordinary skill in the art may understand specific meaning of the above terms in the present application based on specific circumstances.

In the present application, unless otherwise expressly specified and qualified, a first feature being "on" or "under" a second feature may be that the first feature is in direct contact with the second feature, or the first feature is in indirect contact with the second feature through an intermediary. In addition, a first feature being "on", "above", or "over" a second feature may mean that the first feature is directly above or obliquely above the second feature, or just mean that the first feature is at an altitude higher than the second feature. A first feature being "under", "below", or "beneath" a second feature may mean that the first feature is exactly under or obliquely under the second feature, or just mean that the first feature is at an altitude lower than the second feature.

It is hereby noted that when one component is expressed as being "fixed to" or "disposed on" another component, it may be directly located on the another component, or there may be components disposed therebetween. When one component is expressed as being "connected" to another component, it may be directly connected to the another component, or there may be components disposed therebetween at the same time. The terms "vertical", "horizontal", "upper", "lower", "left", "right" and similar expressions used herein are merely for the purpose of illustration, but do not represent the unique implementation.

A battery includes a battery shell, an electrode core and a top cover. When assembling the battery, the electrode core is usually placed in the battery shell, and then the top cover covers the battery shell. However, the traditional battery has great safety hazards.

Bottom rounded corners are usually designed at corners of the battery shell of the traditional battery, resulting in the bottom rounded corner of the battery shell is easy to contact with the bottom corner of the battery cell, which will produce extrusion pressure on the electrode core, resulting in great safety hazards of the traditional battery.

Therefore, the present application designs a battery shell. The battery shell is provided with receding grooves used for receding bottom corner portions of an electrode core, so as to prevent the bottom corner portions of the electrode core from being in contact with the battery shell, which can effectively improve the safety of a battery.

A battery shell, a battery cell and/or a battery disclosed in embodiments of the present application may be used in, but is not limited to be used in, an electrical device such as a vehicle, watercraft, or aircraft. The electrical device may be, but is not limited to, a mobile phone, a tablet, a laptop computer, an electric toy, an electric tool, an electric power cart, an electric vehicle, a ship, a spacecraft, or the like. The electric toy may include stationary or mobile electric toys, such as a game console, an electric car toy, an electric ship toy, an electric airplane toy, and the like. The spacecraft may include an airplane, a rocket, a space shuttle, a spaceship, and the like. A power supply system consisting of the electrical device with the battery cells and/or batteries disclosed in the present application may be used so as to facilitate the supply of electric drive to the electrical device.

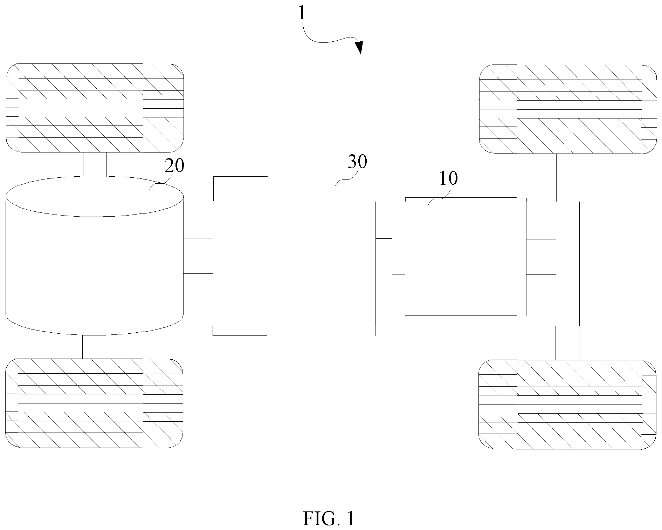

Referring to FIG. 1, FIG. 1 is a schematic structural diagram of a vehicle 1 according to some embodiments of the present application. The vehicle 1 may be an oil-fueled vehicle, a natural gas vehicle, or a new energy vehicle. The new energy vehicle may be a battery electric vehicle, a hybrid electric vehicle, a range-extended electric vehicle, or the like. A battery 10 is disposed inside the vehicle 1. The battery 10 may be disposed at the bottom, front, or rear of the vehicle 1. The battery 10 may be used for supplying power to the vehicle 1. For example, the battery 10 may serve as an operating power supply of the vehicle 1. The vehicle 1 may further include a motor 20 and a controller 30. The controller 30 is used for controlling the battery 10 to supply power to the motor 20, for example, to meet the operating power requirements of the vehicle 1 in start, navigation and running.

In some embodiments of the present application, the battery 10 serves not only as an operating power supply of the vehicle 1, but may also serve as a driving power supply of the vehicle 1 to provide driving power for the vehicle 1 in place of or partly in place of fuel oil or natural gas.

The battery 10 provided by an embodiment of the present application includes a battery cell 100.

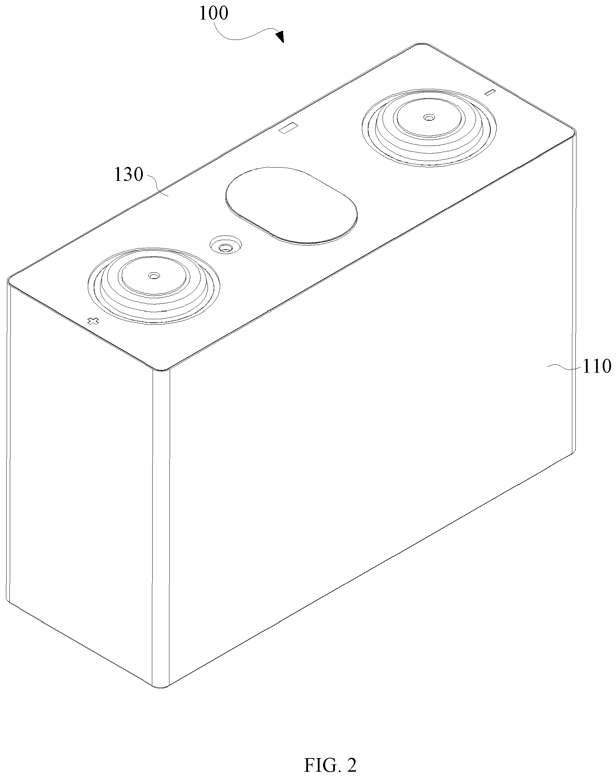

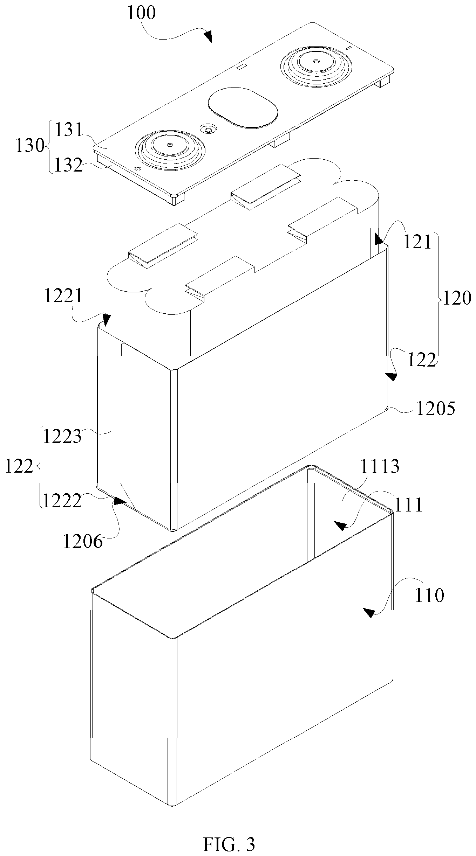

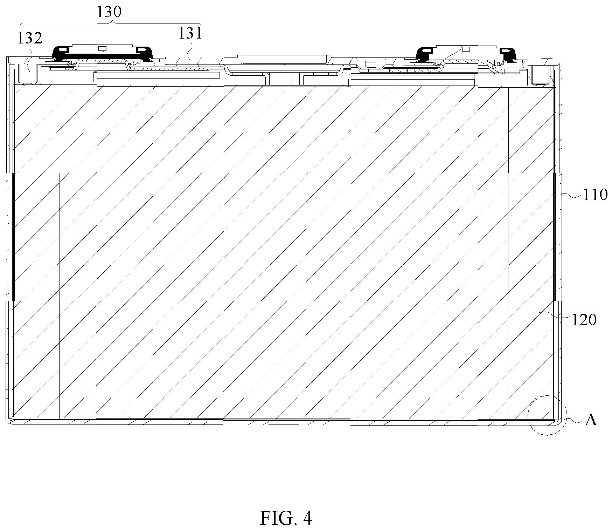

FIG. 2 is a schematic structural diagram of a battery cell 100 according to an embodiment of the present application. FIG. 3 is a schematic exploded diagram of the battery cell 100 according to an embodiment of the present application. FIG. 4 is a sectional diagram of the battery cell 100 according to an embodiment of the present application.

Referring to FIG. 2 to FIG. 5, the battery cell 100 provided by an embodiment of the present application includes a battery shell 110.

Referring to FIG. 3, the battery cell 100 further includes an electrode core 120, and the electrode core 120 can be accommodated in the battery shell 110.

The electrode core 120 includes bottom corner portions 1201, the battery shell 110 has an accommodation cavity 111 used for accommodating the electrode core 120, the accommodation cavity 111 includes a bearing bottom wall 1111, a plurality of side walls 1112 and inner corner portions, and each inner corner portion is disposed between the bearing bottom wall 1111 and the corresponding side walls 1112, to connect the bearing bottom wall 1111 and the two adjacent side walls 1112, where the inner corner portions are provided with receding grooves 112 in a concave manner.

The bearing bottom wall 1111 refers to a part of the groove wall of the accommodation cavity 111 used for bearing the electrode core 120, the bearing bottom wall 1111 is in contact with the bottom of the electrode core 120, and the bearing bottom wall 1111 is used for bearing the electrode core 120.

The receding grooves 112 are formed at the inner corner portions between the bearing bottom wall 1111 and the corresponding side walls 1112 and are concave, that is, the receding grooves 112 ae formed at the connections between the bearing bottom wall 1111 and the corresponding side walls 1112 and are concave, so as to be used for receding the bottom corner portions 1201 of the electrode core 120. Exemplarily, the accommodation cavity 111 also includes a first opening 1113 opposite and spaced apart from the bearing bottom wall 1111, and the receding grooves 112 are concave in a direction of the first opening 1113 towards the bearing bottom wall 1111 with respect to the bearing bottom wall 1111.

The electrode core 120 can be placed in the accommodation cavity 111 and placed on the bearing bottom wall 1111, the bottom corner portions 1201 of the electrode core 120 placed on the bearing bottom wall 1111 are located on the upper side of the bearing bottom wall 1111, and the receding grooves 112 are formed in the inner corner portions between the bearing bottom wall 1111 and the side walls 1112 and disposed in a concave manner. It is understood that the bottom corner portions 1201 of the electrode core 120 can extend into the receding grooves 112 and can be spaced apart from the groove walls of the receding grooves 112. In this way, the bottom corner portions 1201 of the electrode core 120 can be well prevented from being in contact with the inner corner portions between the bearing bottom wall 1111 and the side walls 1112, that is, the bottom corner portions 1201 can not be in contact with the battery shell 110, and it is avoided that corresponding extrusion pressure is generated on the electrode core 120 due to the contact between the battery shell 110 and the bottom corner portions 1201, so that the use of the receding grooves 112 can effectively improve the safety of the battery 10.

In some embodiments, the bearing bottom wall 1111 and the side walls 1112 are perpendicular to each other, and the side walls 1112 are parallel to an axis direction of the accommodation cavity 111.

The inner corner portions are conveniently formed between the bearing bottom wall 1111 and the corresponding side walls 1112, so as to form the corresponding receding grooves 112.

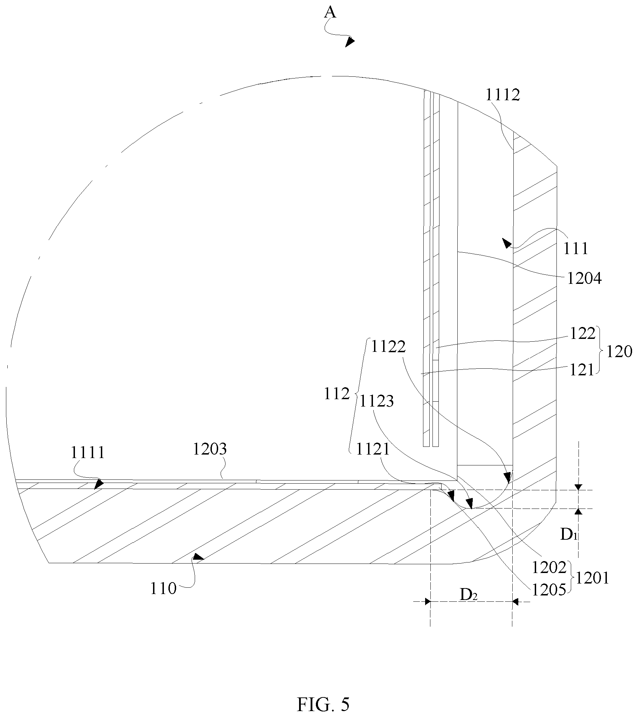

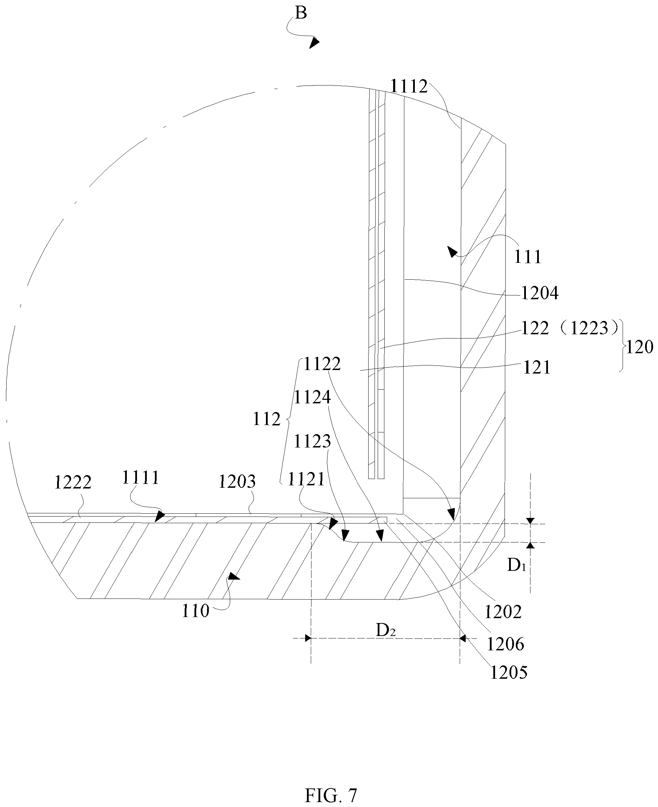

Referring to FIG. 5 and FIG. 7, in some embodiments, along a direction perpendicular to the bearing bottom wall 1111, a first preset interval D₁ is provided between the very bottom of the groove wall of each receding groove 112 and the bearing bottom wall 1111.

If the interval between the very bottom of the groove wall of each receding groove 112 and the bearing bottom wall 1111 is too small, the processing of the receding groove 112 will be affected; and if the interval between the very bottom of the groove wall of each receding groove 112 and the bearing bottom wall 1111 is too large, the internal space of the battery shell 110 will be affected, and thus the energy density of the battery cell 100 is affected.

Therefore, it is necessary to provide a first preset interval D₁ between the very bottom of the groove wall of each receding groove 112 and the bearing bottom wall 1111. Therefore, it not only facilitates the processing of the receding grooves 112, but also ensures the internal space of the battery shell 110, and thus ensures the energy density of the battery cell 100.

In some embodiments, the first preset interval D₁ is greater than or equal to 0.3 millimeter (mm).

The first preset interval D₁ is set to be greater than or equal to 0.3 millimeter (mm), which not only facilitates the processing of the receding grooves 112, but also ensures the energy density of the battery cell 100.

In some embodiments, the groove wall of each receding groove 112 is in rounded corner connection with the bearing bottom wall 1111 and the corresponding side wall 1112 respectively.

It is understood that the groove wall of each receding groove 112 is in an arc transition to the bearing bottom wall 1111 and the corresponding side wall 1112, and the stress concentration can be avoided at the connection between the receding grooves 112 and the bearing bottom wall 1111, and at the connection between the receding grooves 112 and the corresponding side walls 1112, which is conducive to improving the strength of the battery shell 110.

In some embodiments, referring to FIG. 5 and FIG. 7, the groove wall of each receding groove 112 includes a first arc-shaped surface 1121 tangent to the bearing bottom wall 1111 and a second arc-shaped surface 1122 tangent to the corresponding side wall 1112.

The side that is of the first arc-shaped surface 1121 and that is away from the bearing bottom wall 1111 may be directly connected with the side that is of the second arc-shaped surface 1122 and that is away from the corresponding side wall 1112, and the side that is of the first arc-shaped surface 1121 and that is away from the bearing bottom wall 1111 may also be indirectly connected with the side that is of the second arc-shaped surface 1122 and that is away from the corresponding side wall 1112, which is not specifically limited herein.

The first arc-shaped surfaces 1121 tangent to the bearing bottom wall 1111 and the second arc-shaped surfaces 1122 tangent to the corresponding side walls 1112 can well avoid the stress concentration at the connection between the receding grooves 112 and the bearing bottom wall 1111, and at the connection between the receding grooves 112 and the corresponding side walls 1112, which is conducive to improving the strength of the battery shell 110.

In some embodiments (not shown in figures), the first arc-shaped surface 1121 and the second arc-shaped surface 1122 are directly connected.

Therefore, it facilitates the processing of the receding grooves 112 and is conducive to improving the processing efficiency of the battery shell 110.

In some embodiments, referring to FIG. 5, each receding groove 112 further includes a third arc-shaped surface 1123 connected between the first arc-shaped surface 1121 and the second arc-shaped surface 1122, and the third arc-shaped surface 1123 is disposed tangent to the first arc-shaped surface 1121 and the second arc-shaped surface 1122 respectively.

It is understood that the side that is of the first arc-shaped surface 1121 and that is away from the bearing bottom wall 1111 is indirectly connected with the side that is of the second arc-shaped surface 1122 and that is away from the corresponding side wall 1112.

Since the third arc-shaped surface 1123 is disposed tangent to the first arc-shaped surface 1121 and the second arc-shaped surface 1122 respectively, the first arc-shaped surface 1121 and the second arc-shaped surface 1122 are in rounded corner transition, the stress concentration can be avoided at the connection between the receding grooves 112 and the bearing bottom wall 1111, and at the connection between the receding grooves 112 and the corresponding side walls 1112, the stress concentration can also be avoided at the groove walls of the receding grooves 112, and the strength of the battery shell 110 can be better improved.

In some embodiments, referring to FIG. 7, the groove wall of each receding groove 112 further includes a straight wall surface 1124, along the direction perpendicular to the bearing bottom wall 1111, the straight wall surface 1124 is spaced apart from the bearing bottom wall 1111, and the straight wall surface 1124 is tangent to the first arc-shaped surface 1121 and the second arc-shaped surface 1122 respectively.

The straight wall surface 1124 is roughly planar, may be parallel with the bearing bottom wall 1111, and may also be disposed at an angle with the bearing bottom wall 1111.

The straight wall surface 1124 is spaced apart from the bearing bottom wall 1111, and the straight wall surface 1124 is tangent to the first arc-shaped surface 1121 and the second arc-shaped surface 1122 respectively. It is understood that the receding grooves 112 are concave in the direction of the bearing bottom wall 1111 towards the straight wall surfaces 1124 with respect to the bearing bottom wall 1111. In this way, the bottom corner portions 1201 of the electrode core 120 placed on the bearing bottom wall 1111 can be well spaced apart from the groove walls of the receding grooves 112, so that it is avoided that corresponding extrusion pressure is generated on the electrode core 120 due to the contact between the battery shell 110 and the bottom corner portions 1201, and the safety of the battery 10 can be effectively improved.

In some embodiments, referring to FIG. 7, the straight wall surface 1124 is parallel with the bearing bottom wall 1111.

Therefore, the bottom corner portions 1201 of the electrode core 120 placed on the bearing bottom wall 1111 can be well spaced apart from the groove walls of the receding grooves 112, and the safety of the battery 10 can be better improved.

In some embodiments, referring to FIG. 7, the third arc-shaped surface 1123 is disposed between the straight wall surface 1124 and the first arc-shaped surface 1121.

Therefore, the stress concentration can be avoided at the groove walls of the receding grooves 112 and the strength of the battery shell 110 can be well improved.

In some embodiments, referring to FIG. 5 and FIG. 7, along a direction perpendicular to each side wall 1112, a second preset interval D₂ is provided between the farthest point on an edge of the first arc-shaped surface 1121 tangent to the bearing bottom wall 1111 and the side wall 1112.

The side wall 1112 is the corresponding side wall 1112 of the receding groove 112 where the first arc-shaped surface 1121 is located.

If the interval between the farthest point on the edge of the first arc-shaped surface 1121 tangent to the bearing bottom wall 1111 and the side wall 1112 along the direction perpendicular to each side wall 1112 is too small, it is difficult to ensure the certain interval between the peripheral wall of the electrode core 120 and the side walls 1112 and the energy density of the battery cell 100 at the same time. If the interval between the farthest point on the edge of the first arc-shaped surface 1121 tangent to the bearing bottom wall 1111 and the side wall 1112 along the direction perpendicular to each side wall 1112 is too large, the area of the bearing bottom wall 1111 is affected, and thus the bearing pressure is too large. Therefore, it is necessary to provide a second preset interval D₂ between the farthest point on the edge of the first arc-shaped surface 1121 tangent to the bearing bottom wall 1111 and the side wall 1112 along the direction perpendicular to each side wall 1112. It can not only ensure the energy density of the battery cell 100, but also ensure that there is a certain interval between the peripheral wall of the electrode core 120 and the side walls 1112, and avoid excessive bearing pressure.

In some embodiments, the second preset interval D₂ is greater than or equal to 0.5 millimeter (mm).

The second preset interval D₂ is set to be greater than or equal to 0.5 millimeter (mm), which can not only ensure the energy density of the battery cell 100, but also ensure that there is a certain interval between the peripheral wall of the electrode core 120 and the side walls 1112, and avoid excessive bearing pressure.

In some embodiments, the accommodation cavity 111 includes a bearing bottom wall 1111, a plurality of side walls 1112 and inner corner portions, and each inner corner portion is disposed between the bearing bottom wall 1111 and the corresponding side walls 1112, to connect the bearing bottom wall 1111 and the two adjacent side walls 1112, where the inner corner portions are provided with receding grooves 112 in a concave manner. The groove wall of each receding groove 112 is in rounded corner connection with the bearing bottom wall 1111 and the corresponding side wall 1112 respectively.

The use of the receding grooves 112 can effectively improve the safety of the battery 10, and can also avoid the stress concentration at the connection between the receding grooves 112 and the bearing bottom wall 1111, and at the connection between the receding grooves 112 and the corresponding side walls 1112, which is conducive to improving the strength of the battery shell 110.

A battery cell 100 provided by an embodiment of the present application includes the foregoing battery shell 110 and an electrode core 120, where the electrode core 120 has bottom corner portions 1201, the electrode core 120 is accommodated in the accommodation cavity 111 and placed on the bearing bottom wall 1111, and the bottom corner portions 1201 are separated from the groove walls of the receding grooves 112.

It is avoided that the corresponding extrusion pressure is generated on the electrode core 120 due to the contact between the battery shell 110 and the bottom corner portions 1201. The safety of the battery 10 can be effectively improved by using the receding grooves 112 of the battery shell 110.

In some embodiments, the electrode core 120 includes an electrode assembly 121 and an electrical isolation part 122, and the electrode assembly 121 is electrically isolated from the battery shell 110 through the electrical isolation part 122. The bottom corner portions 1201 include first corner portions 1202 disposed on the electrode assembly 121 and second corner portions 1205 disposed on the electrical isolation part 122.

The electrical isolation part 122 refers to a part that can electrically isolate the electrode assembly 121 from the battery shell 110, and may be made of an insulating material.

The electrical isolation part 122 may wrap the bottom and peripheral wall of the electrode assembly 121 so as to electrically isolate the electrode assembly 121 from the battery shell 110.

The electrical isolation part 122 can electrically isolate the electrode assembly 121 from the battery shell 110, which is conducive to improving the safety of the battery cell 100.

In some embodiments, referring to FIG. 5 and FIG. 7, the electrode assembly 121 has a bottom surface 1203 and a plurality of side surfaces 1204, where the first corner portions 1202 are connected between the bottom surface 1203 and the corresponding side surfaces 1204.

Each first corner portion 1202 is connected between the bottom surface 1203 and the corresponding two adjacent side surfaces 1204, located in the receding groove 112 and separated from the groove wall of the receding groove 112 to avoid the contact between the first corner portion 1202 and the battery shell 110, which can improve the safety of the battery cell 100.

In some embodiments, referring to FIG. 3, the electrical isolation part 122 defines an electrical cavity having a second opening 1221 at one end and used for receiving the electrode assembly 121, the electrode assembly 121 is disposed in the electrical cavity through the second opening 1221, and the second corner portions 1205 surround the first corner portions 1202.

The second corner portions 1205 are located at the bottom corner parts of the electrical isolation part 122 and not in contact with the bearing bottom wall 1111.

Referring to FIG. 3 and FIG. 7, the electrical isolation part 122 is provided with a notch 1206 which communicates with the electrical cavity and the accommodation cavity 111 respectively, and the notch 1206 is adjacent to the second corner portion 1205, thus, an electrolyte solution in the electrical cavity can flow into the accommodation cavity 111 through the notch 1206, which can improve the volume of the electrolyte solution to a certain extent, and is conducive to improving the energy density of the battery cell 100.

Referring to FIG. 3 and FIG. 7, the electrical isolation part 122 includes a bottom plate portion 1222 and a side wall portion 1223 connected to the bottom plate portion 1222, and the notch 1206 is located between the bottom plate portion 1222 and the side wall portion 1223.

The side wall portion 1223 and the bottom plate portion 1222 are integrally formed to improve the strength of the electrical isolation part 122. The side wall portion 1223 is bent relative to the bottom plate portion 1222, and the side wall portion 1223 surrounds the peripheral wall of the electrode assembly 121, so that the electrode assembly 121 is placed on the bearing bottom wall 1111 through the bottom plate portion 1222 of the electrical isolation part 122, the bottom of the electrode assembly 121 is electrically isolated from the battery shell 110 through the bottom plate portion 1222, and the peripheral wall of the electrode assembly 121 is electrically isolated from the battery shell 110 through the side wall portion 1223.

In some embodiments, the accommodation cavity 111 also includes a first opening 1113 spaced apart from the bearing bottom wall 1111 along the axis direction of the accommodation cavity 111, the battery cell 100 also includes a top cover 130, and the top cover 130 includes a top cover body 131 and at least one protrusion portion 132 (as shown in FIG. 3), where the top cover body 131 is connected to one end of the battery shell 110 to close the first opening 1113 of the accommodation cavity 111. At least one protrusion portion 132 is arranged on the side of the top cover body 131 towards the accommodation cavity 111 and is connected to one end of the electrical isolation part 122 provided with the second opening 1221.

One or more protrusion portions 132 may be provided, which is not specifically limited herein.

Therefore, the top cover body 131 of the top cover 130 is connected to one end of the battery shell 110 to close the first opening 1113 of the accommodation cavity 111, and at least one protrusion portion 132 of the top cover 130 is connected to one end of the electrical isolation part 122 provided with the second opening 1221, which is conducive to improving the overall strength and stability of the battery cell 100.

A battery 10 provided by an embodiment of the present application includes the foregoing battery cell 100.

An electrical device provided by an embodiment of the present application includes the foregoing battery 10.

Various technical features of the foregoing embodiments may be combined arbitrarily, and all possible combinations of the various technical features of the foregoing embodiments have not been described for the sake of concise description; however, as long as there is no conflict in the combinations of these technical features, they shall all be regarded as falling within the scope of this specification.

The foregoing embodiments merely describe several implementations of the present application. The description is relatively detailed, but constitutes no limitation on the patent scope of the present application. It is hereby noted that several variations and improvements, which may be made to the embodiments by a person of ordinary skill in the art without departing from the concept of the present application, fall within the protection scope of the present application. Therefore, the patent protection scope of the present application should be subject to the attached claims.

## Claims

1. A battery shell, having an accommodation cavity (111), the accommodation cavity (111) comprising:
a bearing bottom wall (1111);
a plurality of side walls (1112); and
inner corner portions, connected between the bearing bottom wall (1111) and the corresponding side walls (1112);
wherein the inner corner portions are provided with receding grooves (112) in a concave manner.

2. The battery shell according to claim 1, wherein along a direction perpendicular to the bearing bottom wall (1111), a first preset interval D₁ is provided between the very bottom of a groove wall of each receding groove (112) and the bearing bottom wall (1111).

3. The battery shell according to claim 2, wherein the first preset interval D₁ is greater than or equal to 0.3 mm.

4. The battery shell according to any one of claims 1 to 3, wherein the groove wall of each receding groove (112) is in rounded corner connection with the bearing bottom wall (1111) and the corresponding side wall (1112) respectively.

5. The battery shell according to claim 4, wherein the groove wall of each receding groove (112) comprises a first arc-shaped surface (1121) tangent to the bearing bottom wall (1111) and a second arc-shaped surface (1122) tangent to the corresponding side wall (1112).

6. The battery shell according to claim 5, wherein the first arc-shaped surface (1121) and the second arc-shaped surface (1122) are directly connected.

7. The battery shell according to claim 5, wherein each receding groove (112) further comprises a third arc-shaped surface (1123) connected between the first arc-shaped surface (1121) and the second arc-shaped surface (1122); and
the third arc-shaped surface (1123) is disposed tangent to the first arc-shaped surface (1121) and the second arc-shaped surface (1122) respectively.

8. The battery shell according to claim 5, wherein the groove wall of each receding groove (112) further comprises a straight wall surface (1124), and along the direction perpendicular to the bearing bottom wall (1111), the straight wall surface (1124) is spaced apart from the bearing bottom wall (1111); and
the straight wall surface (1124) is tangent to the first arc-shaped surface (1121) and the second arc-shaped surface (1122) respectively.

9. The battery shell according to claim 8, wherein the straight wall surface (1124) is disposed parallel with the bearing bottom wall (1111).

10. The battery shell according to claim 5, wherein along a direction perpendicular to each side wall (1112), a second preset interval D₂ is provided between the farthest point on an edge of the first arc-shaped surface (1121) tangent to the bearing bottom wall (1111) and the side wall (1112).

11. The battery shell according to claim 10, wherein the second preset interval D₂ is greater than or equal to 0.5 mm.

12. A battery cell, comprising:
the battery shell (110) according to any one of claims 1 to 11; and
an electrode core (120), having bottom corner portions (1201);
wherein the electrode core (120) is accommodated in the accommodation cavity (111) and placed on the bearing bottom wall (1111); and
the bottom corner portions (1201) are separated from the groove walls of the receding grooves (112).

13. The battery cell according to claim 12, wherein the electrode core (120) comprises:
an electrode assembly (121); and
an electrical isolation part (122), the electrode assembly (121) being electrically isolated from the battery shell (110) through the electrical isolation part (122); and
the bottom corner portions (1201) comprising first corner portions (1202) disposed on the electrode assembly (121) and second corner portions (1205) disposed on the electrical isolation part (122).

14. The battery cell according to claim 13, wherein the electrode assembly (121) has:
a bottom surface (1203); and
a plurality of side surfaces (1204);
wherein each first corner portion (1202) is connected between the bottom surface (1203) and the corresponding side surface (1204).

15. A battery, comprising the battery cell (100) according to any one of claims 12 to 14.

16. An electrical device, comprising the battery (10) according to claim 15.
